# EUROPÄISCHE PATENTANMELDUNG

(11) **EP 1 108 602 A1**
(43) Veröffentlichungstag der Anmeldung: **20.06.2001**
(21) Anmeldenummer: 99890383.5
(22) Anmeldetag: 13.12.1999
(51) Int. Cl.: B60K 17/22, F16C 3/02

(54) **Welle mit einstückig ausgebildetem Flansch**

(71) Anmelder: Pankl R&D GmbH, 8600 Bruck an der Mur (AT)
(72) Erfinder: Pankl, Gerold, 8600 Bruck an der Mur (AT)
(74) Vertreter: Patentanwälte BARGER, PISO & PARTNER

(57) **Zusammenfassung**

Die Erfindung betrifft eine Welle, insbesondere eine Antriebswelle für Luft-, Wasser- oder Landfahrzeuge, die entweder aus Verbundwerkstoff wie partikelverstärktem Kunststoff, MMC, faserverstärktem Verbundwerkstoff od.dgl., oder aus metallischem Werkstoff wie Aluminium, Titan oder Stahl besteht.

Die Welle ist dadurch gekennzeichnet, daß zumindest ein Flansch (2) einstückig mit der Welle (1) ausgebildet ist.

Die Erfindung ist weiters bevorzugt dadurch gekennzeichnet, daß bei Verwendung von Fasern diese in zumindest einer der Faserlagen in einem Winkel zu den Erzeugenden der Welle (1) angeordnet sind, der größer ist als 20°.

Eine Ausgestaltung ist dadurch gekennzeichnet, daß der Flansch (2) einen von der Kreisform abweichenden, bevorzugt im wesentlichen polygonalen, Querschnitt aufweist.

## Beschreibung

Die Erfindung betrifft Wellen, insbesondere Antriebswellen für Luft-, Wasser- und Landfahrzeuge, die zumindest an einem Ende einstückig einen Flansch ausgebildet haben und die entweder aus Verbundwerkstoff, beispielsweise aus faserverstärktem Werkstoff oder sogenanntem "metal matrix composite" oder aus plastisch deformiertem Metall, insbesondere Aluminium, Titan oder Stahl, bestehen.

Eine Welle aus faserverstärktem Kunststoff ist aus der DE 37 40 754 A bekannt und wird dort verwendet, um eine drehweiche Verbindung im Antriebsstrang zu schaffen, die Schwingungen u.dgl. dämpfen soll. Um dieses Ziel zu erreichen, werden gemäß dieser Druckschrift die Fasern im wesentlichen parallel zur Achse angeordnet, so daß beim maximal vorgesehenem Drehmoment eine Verdrehung der beiden Wellenenden zueinander von zumindest 10° erfolgt.

Es gibt eine ganze Anzahl von Anwendungsgebieten, bei denen gewünscht wird, die Welle insbesondere die Antriebswelle eines Fahrzeuges, extrem leicht auszubilden, dabei aber. anders als beim bekannten Stand der Technik, eine große Steifigkeit und insbesondere eine große Drehsteifigkeit zu erzielen.

Erfindungsgemäß wird dieses Ziel dadurch erreicht, daß eine Welle aus Verbundwerkstoff verwendet wird, bei der, bei Verwendung von Fasern als Verstärkungsmaterial, die Fasern zumindest in einer der Faserlagen in einem Winkel zu den Erzeugenden verlaufen, der größer ist als 20° und daß bevorzugt die Welle zumindest einerends mit einem Flansch oder dergl. Anschlußelement, das zur Befestigung der weiterführenden Teile des Antriebsstranges dient. versehen ist. Bevorzugt werden bei Verwendung von Fasern diese in mehreren lagen unter Winkeln von 45° oder darüber, vorteilhafterweise Lage für Lage gekreuzt, angeordnet. Die genannten Winkel werden dabei immer so gemessen, daß sie nicht über 90° betragen (z.B. 20° statt 160°).

Dies wird unerwarteterweise möglich, vermutlich, da durch die radiale Vergrößerung im Flanschbereich die bei gegebenem Drehmoment auftretenden Kräfte, die umgekehrt proportional zum Radius geringer werden, dann nur mehr so groß sind, daß sie trotz der quasipunktuellen Einleitung in den einstückig mit der Welle ausgebildeten Flansch vom Verbundwerkstoff ertragen werden.

Zu den verwendbaren Werkstoffen ist auszuführen, daß es seit kurzer Zeit nicht nur glasfascr- bzw. kohlefaser- (oder anders geformte Verstärkungspartikel aufweisende) oder kevlarverstärkte Kunststoffe gibt, sondern eine Materialgruppe mit der Bezeichnung MMC, was für "metal matrix composite" steht. Dabei wird statt des Kunststoffes ein Metall als Matrixmaterial verwendet, insbesondere Titan, Aluminium oder Magnesium. Es werden in der Beschreibung und den Ansprüchen diese Werkstoffe auch als "Verbundwerkstoffe" beeichnet.

Das Verstärkungsmaterial kann aus Partikeln unterschiedlicher Form bestehen, worunter auch Fasern fallen. Wenn Fasern verwendet werden, können sie aus den bekannten Fasermaterialien bestehen. Als Beispiele seien nur Boron oder Siliziumcarbid genannt. Die Faserlänge kann in weiten Grenzen variieren, auch sogenannte "whiskers" (Stapelfasern) können geordnet oder statistisch liegend (stöchastische Anordnung), verwendet werden. All diese Faserarten werden in der vorliegenden Beschreibung und den Ansprüchen als "Fasern" bezeichnet.

Derartige Werkstoffe weisen Eigenschaften auf, die sehr genau und in weiten Grenzen in mechanischer, thermischer und chemischer Hinsicht an die jeweiligen Erfordernisse angepaßt werden können.

Bei Verwendung metallischer Werkstoffe erfolgt die Bearbeitung erfindungsgemäß durch plastische Deformation, gegebenenfalls in mehreren Schritten, entweder im kalten oder im erwärmten, jedenfalls aber noch festen Zustand. Gegebenenfalls wird anschließend an die Deformation (oder zwischen einzelnen Schritten der Deformation) ein Verfahren zur Verringerung der bei der Deformation erzeugten inneren mechanischen Spannungen, beispielsweise eine Wärmebehandlung, durchgeführt.

Die Erfindung ist in der Zeichnung anhand eines Ausführungsbeispieles dargestellt. Dabei zeigt
die Fig. 1 eine erfindungsgemäße Welle und
die Fig. 2 ein Detail.

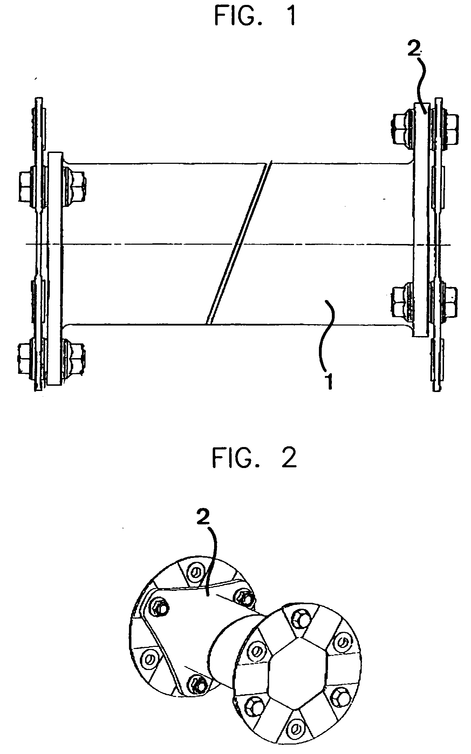

Wie aus Fig. 1 ersichtlich ist, ist eine erfindungsgemäße Welle 1, die aus Verbundwerkstoff besteht, einstückig mit ihrem Flansch hergestellt, wobei es nicht notwendig ist, daß der Flansch kreisrund ausgebildet ist. Er kann beispielsweise so, wie es in Fig. 2 ersichtlich ist, im wesentlichen polygonale Form aufweisen, um Material, Kosten und Gewicht zu sparen. Bei der Ausführungsform der Fig. 1 und 2 ist an den beiden Flanschen der Welle 1 jeweils eine Art Hardy-Scheibe dargestellt, die der Schwingungsdämpfung dient. Es ist selbstverständlich nicht notwendig, eine solche Scheibe vorzusehen, diese dient nur der Illustrierung der durch die Erfindung geschaffenen Möglichkeiten.

Die Welle 1 ist bevorzugt, auch wenn dies aus Fig. 1 und 2 nicht ersichtlich ist, als Rohr ausgebildet und nicht voll, da die inneren Bereiche zur Übertragung des Drehmomentes nichts wesentliches beitragen und da - wenn Fasern als Verstärkungsmaterial verwendet werden - beim Wickeln der Fasern auf einen Kern auch von der Herstellung her die Schaffung einer Hohlwelle einfacher ist als die Schaffung einer Vollwelle.

Wenn Fasern als Verstärkungsmaterial verwendet werden, werden diese, wie bei der Verarbeitung von Fasern üblich, meist gleich zu mehreren zusammengefaßt, um entsprechende Kerne gewickelt und Schicht für Schicht mit dem passenden Werkstoff verklebt, gefolgt von einem Aushärten, meist bei erhöhter Temperatur, die heute bei hochwertigen Werkstoffen bis zu 250°C und darüber betragen kann.

Die Ausbildung der Flansche als einteiliger integraler Bestandteil der Welle ist in Kenntnis der Erfindung durch Schaffung der gewünschten Formen für den Fachmann leicht möglich, die Durchgangslöcher für die Schrauben des Flansches können entweder nach erfolgter Fertigstellung der Welle ins Volle gearbeitet werden oder es können zumindest teilweise die Fasern um entsprechend eingesetzte Kerne herumgeführt werden, so daß die Löcher für die Flanschschrauben ebenfalls "einstückig" bei der Herstellung der Welle mit-hergestellt werden.

Die Herstellung und die detaillierte Ausbildung der erfindungsgemäßen Welle ist für den Fachmann auf dem Gebiete des faserverstärkten Werkstoffes in Kenntnis der Erfindung leicht möglich, es müssen dabei nur die auf diesem Gebiete üblichen konstruktiven Maßnahmen beachtet werden.

Das gleiche gilt für die zur Verwendung kommenden Werkstoffe, auch diese sind dem Fachmann auf dem Gebiete der faserverstärkten Werkstoffe geläufig und können unter Bedachtnahme auf die Beanspruchungen beim jeweiligen Einsatzgebiet aus einer Vielzahl industriell erhältlicher Produkte gewählt werden.

Bei der Herstellung der erfindungsgemäß ausgebildeten Welle aus einem metallischen Werkstoff können verschiedene Arten der plastischen Deformation verwendet werden, beispielsweise Drücken oder Aufformen durch Wasserdruck. Dabei kann durch Ausbilden des Rohlings als Rohr (bzw. durch Schaffung eines Hohlraumes im Bereich des kommenden Flansches) nicht nur Gewicht gespart werden, sondern es ist auch möglich, das Rohrinnere als Druckkammer zu verwenden und das Rohr in eine passende Form zu stekken, an die es von innen her durch den aufgebrachten Druck angepreßt wird. Die endgültige Ausbildung des Flansches kann beispielsweise durch einen Vorgang ähnlich dem Stauchen oder durch Verwendung eines Stempels erfolgen.

## Patentansprüche

1. Welle, insbesondere Antriebswelle für Luft-, Wasser- oder Landfahrzeuge, entweder aus Verbundwerkstoff wie partikelverstärktem Kunststoff, MMC, faserverstärktem Verbundwerkstoff, od.dgl. oder aus metallischem Werkstoff, insbesondere Titan, Aluminium oder Stahl bestehend, dadurch gekennzeichnet, daß die Welle (1) zumindest einerends einstückig einen Flansch (2) ausgebildet hat.

2. Welle nach Anspruch 1 aus faserhältigem Verbundwerkstoff, dadurch gekennzeichnet, daß die Fasern in zumindest einer der Faserlagen in einem Winkel zu den Erzeugenden der Welle (1) angeordnet sind, der größer ist als 20°.

3. Welle nach Anspruch 1 oder 2, dadurch gekennzeichnet, daß der Flansch (2) einen von der Kreisform abweichenden, bevorzugt im wesentlichen polygonalen, Querschnitt aufweist.

4. Welle nach einem der vorangehenden Ansprüche, dadurch gekennzeichnet, daß sie aus kohlefaserverstärktem Kunststoff besteht.

5. Welle nach einem der Ansprüche 1 bis 4, dadurch gekennzeichnet, daß sie aus "MMC" (metal matrix composit-Material) besteht.

6. Welle nach einem der Ansprüche 1 bis 4, dadurch gekennzeichnet, daß sie aus metallischem Werkstoff besteht, und daß der Flansch (2) durch plastische Deformation des Materials der Welle gebildet ist.

7. Welle nach einem der Ansprüche 1 bis 6, dadurch gekennzeichnet, daß die Welle (1) zumindest im Bereich des Flansches (2) hohl ausgebildet ist.
